# EUROPEAN PATENT SPECIFICATION

(11) **EP 2 640 796 B1**
(45) Date of publication and mention of the grant of the patent: **26.02.2020**
(21) Application number: 11793597.3
(22) Date of filing: 17.11.2011
(51) Int. Cl.: C09J 163/00, F03D 1/06, C08G 59/18

(54) **STRUCTURAL ADHESIVE COMPOSITIONS**
STRUKTURKLEBERZUSAMMENSETZUNGEN
COMPOSITIONS D'ADHÉSIF STRUCTURAL

(30) Priority: 19.11.2010 US 949878
(43) Date of publication of application: 25.09.2013
(60) Divisional application: 20153314.8
(73) Proprietor: PPG Industries Ohio, Inc., Cleveland, OH 44111 (US)
(72) Inventor: DESAI, Umesh C., Wexford Pennsylvania 15090 (US); CHAO, Tien-Chieh, Mars Pennsylvania 16046 (US); NAKAJIMA, Masayuki, Wexford Pennsylvania 15090 (US); RAGUNATHAN, Kaliappa G., Gibsonia Pennsylvania 15044 (US)
(74) Representative: f & e patent
(86) International application number: PCT/US2011/061265
(87) International publication number: WO 2012/068414

(56) References cited:
- WO-A1-98/01495
- WO-A1-2008/112952
- US-A- 3 860 541
- US-A- 4 091 001
- US-A1- 2010 280 191
- DATABASE WPI Week 199746 Thomson Scientific, London, GB; AN 1997-498380 XP002683590, -& JP 9 235354 A (DAINIPPON INK & CHEM INC) 9 September 1997 (1997-09-09)
- PHAM ET AL: "Epoxy Resins", 1 January 2004 (2004-01-01), ENCYCLOPEDIA OF POLYMER SCIENCE AND TECHNOLOGY,, PAGE(S) 1 - 127, XP007920796, pages 727,708 pages 733-735; table 24 middle of the page 680

## Description

### FIELD OF THE INVENTION

The present invention relates to structural adhesive compositions and more particularly to 2K structural adhesive compositions.

### BACKGROUND INFORMATION

Recently, wind turbines have received increased attention as environmentally safe and relatively inexpensive alternative energy sources. Considerable efforts are being made to develop wind turbines that are reliable and efficient.

Generally, a wind turbine includes a rotor with multiple wind turbine blades. The wind turbine blades are shaped as elongated airfoils configured to provide rotational forces in response to wind. These wind turbine blades transform the kinetic energy of wind into a rotational torque or force that drives one or more coupled generators by methods well known to those of skill in the art. US 2010/020191 A1 discloses epoxy resins used for manufacturing composites used in wind turbines.

One current approach to manufacturing wind turbine blades is to produce each blade either as two half shells and a spar, or as two half shells with an integral spar. In both cases, the two half shells are bonded together along their edges with an adhesive material to form the complete blade. Typically, the adhesive material is a two-component (2K) structural adhesive material that includes two components that chemically react (i.e., crosslink) when mixed under ambient or slightly thermal conditions to bond together the half shells. Alternatively, one-component (1K) adhesives may be utilized that require an external energy source (heat, radiation or moisture) in order to facilitate the chemical reaction.

The adhesives that are utilized to couple the wind turbine blade halves must be able to withstand the centrifugal forces applied to each blade during use and maintain bond strength for the blade's lifetime under constant thermal cycling and environmental attack. In addition, these adhesive materials should be relatively easy to apply.

In addition, for 2K adhesives, pot life is an important consideration. The term "pot life", as those of ordinary skill in the adhesives arts recognizes, may be defined as the length of time for the adhesive mixture to reach 50°C, and is generally defined as the time period in which the adhesive composition is sufficiently liquid such that it may be applied to a substrate material to be bonded. An adhesive material with a shorter pot life is wherein the two components react more quickly, and an adhesive material with longer pot life is wherein the two components react more slowly.

The present invention is directed towards adhesive compositions that provide sufficient bond strength, are easy to apply, and have sufficiently long pot lives for use in bonding together substrate materials such as wind turbine blades.

### SUMMARY OF THE INVENTION

One embodiment of the present invention discloses an adhesive composition as claimed comprising (a) a first component comprising (i) an epoxy-adduct formed as a reaction product of reactants comprising a first epoxy compound, a polyol, and an anhydride and/or a diacid; and (b) a second component that chemically reacts with the first component.

Other related embodiments disclose multi-component composite coatings, coated substrates, and methods for coating a substrate.

### BRIEF DESCRIPTION OF FIGURES

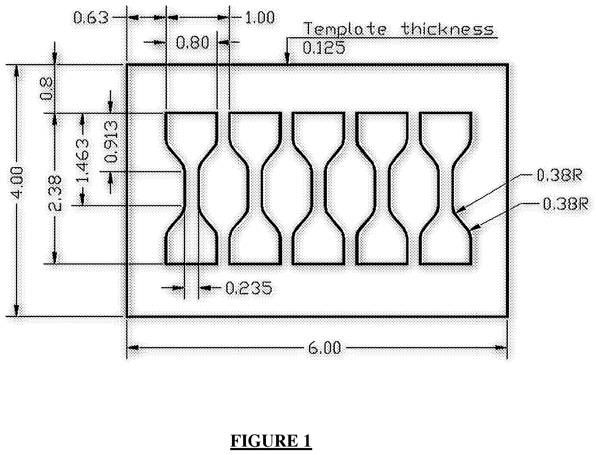

Figure 1 is a perspective view of a Teflon template assembly for evaluating structural adhesive composition according to an exemplary embodiment of the present invention.

### DETAILED DESCRIPTION

For purposes of the following detailed description, it is to be understood that the invention may assume various alternative variations and step sequences except where expressly specified to the contrary. Moreover, other than in any operating examples, or where otherwise indicated, all numbers expressing, for example, quantities of ingredients used in the specification are to be understood as being modified in all instances by the term "about". Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In this application, the use of the singular includes the plural and plural encompasses singular, unless specifically stated otherwise. In addition, in this application, the use of "or" means "and/or" unless specifically stated otherwise, even though "and/or" may be explicitly used in certain instances.

As noted above, in general, the present invention discloses 2K ("Two-Component") structural adhesive compositions that are used to bond together two substrate materials. The adhesive is applied to either one or both of the materials being bonded. The pieces are aligned and pressure and spacers may be added to control bond thickness. A thermal blanket may be used to aid in the curing process.

Suitable substrate materials that may be bonded by the 2K structural adhesive components include but are not limited to materials such as, metals or metal alloys, natural materials such as wood, polymeric materials such as hard plastics, or composite materials.

The 2K structural adhesive composition includes two chemical components that, when mixed prior to application, chemically react with each other and harden (i.e., cure) in ambient or slightly thermal conditions.

The 2K ("Two-Component") structural adhesive compositions of the present invention are suitable for use in bonding the two half shells of wind turbine blades. In this application, the mixed adhesive composition is applied along the edges of one or both of the half shells of the wind turbine blades. The half shells are then pressed together and the adhesive is allowed to cure for a number of hours. Preferably, a thermal blanket (at about 70°C) is applied to the half shells to aid in the curing process. The half shells, or other components of wind turbine blades, may be formed from metals such as aluminum, metal alloys such as steel, woods such balsa wood, polymeric materials such as hard plastics, or composite materials such as fiber reinforced plastics. In one embodiment, the half shells are formed from fiberglass composites or carbon fiber composites.

As noted above, the 2K structural adhesives of the present invention are formed from two chemical components, namely, a first component and a second component which are mixed just prior to application. The first component (i.e., an epoxy component) preferably comprises an epoxy-adduct and another epoxy compound, or second epoxy compound. The second component comprises a curing component that reacts with the first component to form a bond that provides the substrates to which it is applied with desirable bonding characteristics. The curing component is an amine compound, although other curing components such as sulfide curing components may additionally be utilized.

The equivalent ratio of amine to epoxy in the adhesive composition may vary from about 0.5:1 to about 1.5:1. Preferably, the equivalent ratio of amine to epoxy is from 1.0:1 to 1.25:1. Most preferably, the equivalent ratio of amine to epoxy is slightly above 1:1. As described herein, the equivalents of epoxy used in calculating the equivalent ratio of epoxy are based on the epoxy equivalent weight of the first component, and the equivalents of amine used in calculating the equivalent ratio of amine are based on the amine hydrogen equivalent weight (AHEW) of the second component.

In one embodiment, the epoxy-adduct is formed as the reaction product of reactants comprising a first epoxy compound, a polyol, and an anhydride.

In another embodiment, the epoxy-adduct is formed as the reaction product of reactants comprising a first epoxy compound, a polyol, and a diacid.

In still another embodiment, the epoxy-adduct is formed as the reaction product of reactants comprising a first epoxy compound, a polyol, an anhydride, and a diacid.

In these embodiments, the epoxy-adduct comprises from 3 to 50 weight percent, and more preferably from 3 to 25 weight percent of the first component, while the second epoxy compound comprises from 50 to 97 weight percent, and more preferably from 75 to 97 weight percent of the first component.

Useful first epoxy compounds that can be used to form the epoxy-adduct include polyepoxides. Suitable polyepoxides include polyglycidyl ethers of Bisphenol A, such as EPON® 828 and 1001 epoxy resins, and Bisphenol F diepoxides, such as EPON® 862, which are commercially available from Hexion Specialty Chemicals, Inc. Other useful polyepoxides include polyglycidyl ethers of polyhydric alcohols, polyglycidyl esters of polycarboxylic acids, polyepoxides that are derived from the epoxidation of an olefinically unsaturated alicyclic compound, polyepoxides containing oxyalkylene groups in the epoxy molecule, and epoxy novolac resins. Still other non-limiting first epoxy compounds include epoxidized Bisphenol A novolacs, epoxidized phenolic novolacs, epoxidized cresylic novolac, and triglycidyl p-aminophenol bismaleiimide.

Useful polyols that may be used to form the epoxy-adduct include diols, triols, tetraols and higher functional polyols. The polyols can be based on a polyether chain derived from ethylene glycol, propylene glycol, butylenes glycol, hexylene glycol and the like and mixtures thereof. The polyol can also be based on a polyester chain derived from ring opening polymerization of caprolactone. Suitable polyols may also include polyether polyol, polyurethane polyol, polyurea polyol, acrylic polyol, polyester polyol, polybutadiene polyol, hydrogenated polybutadiene polyol, polycarbonate polyols, polysiloxane polyol, and combinations thereof. Polyamines corresponding to polyols can also be used, and in this case, amides instead of carboxylic esters will be formed with acids and anhydrides.

Suitable diols that may be utilized to form the epoxy-adduct are diols having a hydroxyl equivalent weight of between 30 and 1000. Exemplary diols having a hydroxyl equivalent weight from 30 to 1000 include diols sold under the trade name Terathane®, including Terathane® 250, available from Invista. Other exemplary diols having a hydroxyl equivalent weight from 30 to 1000 include ethylene glycol and its polyether diols, propylene glycol and its polyether diols, butylenes glycol and its polyether diols, hexylene glycols and its polyether diols, polyester diols synthesized by ring opening polymerization of caprolactone, and urethane diols synthesized by reaction of cyclic carbonates with diamines. Combination of these diols and polyether diols derived from combination various diols described above could also be used. Dimer diols may also be used including those sold under trade names Pripol® and Solvermol™ available from Cognis Corporation.

Polytetrahydrofuran-based polyols sold under the trade name Terathane®, including Terathane® 650, available from Invista, may be used. In addition, polyols based on dimer diols sold under the trade names Pripol® and Empol®, available from Cognis Corporation, or bio-based polyols, such as the tetrafunctional polyol Agrol 4.0, available from BioBased Technologies, may also be utilized.

Useful anhydride compounds to functionalize the polyol with acid groups include hexahydrophthalic anhydride and its derivatives (e.g. methyl hexahydrophthalic anhydride); phthalic anhydride and its derivatives (e.g. methyl phthalic anhydride); maleic anhydride; succinic anhydride; trimelletic anhydride; pyromelletic dianyhydrige (PMDA); 3,3', 4,4'-oxydiphthalic dianhydride (ODPA); 3,3', 4,4'-benzopherone tetracarboxylic dianhydride (BTDA); and 4,4'-diphthalic (hexamfluoroisopropylidene) anhydride (6FDA). Useful diacid compounds to functionalize the polyol with acid groups include phthalic acid and its derivates (e.g. methyl phthalic acid), hexahydrophthalic acid and its derivatives (e.g. methyl hexahydrophthalic acid), maleic acid, succinic acid, adipic acid, etc. Any diacid and anhydride can be used; however, anhydrides are preferred.

In one embodiment, the polyol comprises a diol, the anhydride comprises a monoanhydride, and the first epoxy compound comprises a diepoxy compound, wherein the mole ratio of diol, monoanhydride, and diepoxy compounds in the epoxy-adduct may vary from 0.5:0.8:1.0 to 0.5:1.0:6.

In another embodiment, the polyol comprises a diol, the anhydride comprises a monoanhydride, and the first epoxy compound comprises a diepoxy compound, wherein the mole ratio of diol, monoanhydride, and diepoxy compounds in the epoxy-adduct may vary from 0.5:0.8:0.6 to 0.5:1.0:6.0.

In another embodiment, the second epoxy compound of the first component is a diepoxide compound that has an epoxy equivalent weight of between about 150 and about 1000. Suitable diepoxides having an epoxy equivalent weight of between about 150 and about 1000 include polyglycidyl ethers of Bisphenol A, such as EPON® 828 and 1001 epoxy resins, and Bisphenol F diepoxides, such as EPON® 862, which are commercially available from Hexion Specialty Chemicals, Inc.

In another embodiment, the second epoxy compound of the first component is a diepoxide compound or a higher functional epoxides (collectively, a "polyepoxide"), including polyglycidyl ethers of polyhydric alcohols, polyglycidyl esters of polycarboxylic acids, polyepoxides that are derived from the epoxidation of an olefinically unsaturated alicyclic compound, polyepoxides containing oxyalkylene groups in the epoxy molecule, and epoxy novolac resins.

Still other non-limiting second epoxy compounds include epoxidized Bisphenol A novolacs, epoxidized phenolic novolacs, epoxidized cresylic novolac, and triglycidyl p-aminophenol bismaleiimide.

In another embodiment, the second epoxy compound of the first component comprises an epoxy-dimer acid adduct. The epoxy-dimer acid adduct may be formed as the reaction product of reactants comprising a diepoxide compound (such as a Bisphenol A epoxy compound) and a dimer acid (such as a C₁₀-C₁₂ dimer acid).

In another embodiment, the second epoxy compound of the first component comprises a carboxyl-terminated butadiene-acrylonitrile copolymer modified epoxy compound.

Useful amine compounds that may be used include primary amines, secondary amines, tertiary amines, and combinations thereof. Useful amine compounds that can be used include diamines, triamines, tetramines, and higher functional polyamines.

Suitable primary amines include alkyl diamines such as 1,2-diaminoethane, 1,3-diaminopropane, 1,4-diaminobutane, neopentyldiamine, 1,8-diaminooctane, 1,10-diaminodecane, 1,-12-diaminododecane and the like; 1,5-diamino-3-oxapentane, diethylenetriamine, triethylenetetramine, tetraethylenepentamine and the like; cycloaliphatic diamines such as 1,2-bis(aminomethyl)cyclohexane, 1,3-bis(aminomethyl)cyclohexane, 1,4-bis(aminomethyl) cyclohexane, bis(aminomethyl)norbornane and the like; aromatic alkyl diamines such as 1,3-bis(aminomethyl)benzene (m-xylene diamine) and 1,4-bis(aminomethyl)benzene (p-xylenediamine) and their reaction products with epichlorohydrin such as Gaskamine 328 and the like; amine-terminated polyethyleneglycol such as Huntsman Corporation Jeffamine ED series and amine-terminated polypropylene glycol such as Huntsman Corporation Jeffamine D series; and amine-terminated polytetrahydrofurane such as Huntsman Jeffamine EDR series. Primary amines having a functionality higher than 2 include, for example, the Jeffamine T series, available from Huntsman Corporation, which are amine-terminated propoxylated trimethylolpropane or glycerol and aminated propoxylated pentaerythritols.

Still other amines that may be utilized include isophorone diamine, methenediamine, 4,8-diamino-tricyclio[5.2.1.0]decane and N-aminoethylpiperazine.

Preferred amine compounds include triethylenetetramine (TETA), isophorone diamine, 1,3 bis(aminomethyl)cyclohexane, and polypropylene oxide-based polyetheramines.

Preferred polypropylene oxide-based polyetheramines include the Jeffamine series products available from Huntsman Chemical of Houston, Texas. Jeffamine series products are polyetheramines characterized by repeating oxypropylene units in their respective structures.

One exemplary class of Jeffamine products, the so-called "Jeffamine D" series products, are amine terminated PPGs (propylene glycols) with the following representative structure (Formula (I)): 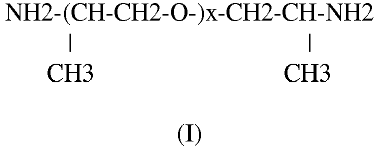 wherein x is 2 to 70.

Jeffamine D-230 is one D series product that is preferably used. Jeffamine D-230 has an average molecular weight of about 230 (wherein x is 2.5) and an amine hydrogen equivalent weight (AHEW) of about 60. Other exemplary Jeffamine D series products that may be used according to Formula (I) include those wherein x is from 2.5 to 68.

Besides all these potential additional amines, according to the invention polypropylene oxide-based polyetheramines are always present as second omponent and are tetrafunctional, primary amines with a number average molecular weight from 200 to 2000, and more preferably from 600 to 700, and having an AHEW of greater than 60, and more preferably from 70 to 90. Jeffamine XTJ-616 is one preferred polypropylene oxide-based polyetheramines that may be utilized in the present invention. Jeffamine XTJ-616 has a number average molecular weight of about 660 and an AHEW of 83.

Higher AHEW amine compounds, such as Jeffamine XTJ-616 and Jeffamine D-230, may be particularly useful in 2K adhesive composition wherein a longer pot life is desired. Conventional tetramines, such as triethylenetetramine, with lower AHEWS have substantially shorter pot lives by comparison. This present invention thus provides a way to manipulate pot life with tetrafunctional amines such as Jeffamine XTJ-616.

In still another embodiment, reinforcement fillers may be added to the adhesive composition as a part of the first component or as a part of the second component, or both.

Useful reinforcement fillers that may be introduced to the adhesive composition to provide improved mechanical properties include fibrous materials such as fiberglass, fibrous titanium dioxide, whisker type calcium carbonate (aragonite), and carbon fiber (multi-wall carbon nanotube). In addition, fiber glass ground to 5 microns or wider and to 50 microns or longer may also provide additional tensile strength. More preferably, fiber glass ground to 5 microns or wider and to 100-300 microns in length is utilized. Preferably, such reinforcement fillers, if utilized, comprise from 2 to 20 weight percent of the adhesive composition.

In still another embodiment, fillers, thixotropes, colorants, tints and other materials may be added to the first or second component of the adhesive composition.

Useful thixotropes that may be used include untreated fumed silica and treated fumed silica, Castor wax, clay, and organo clay. In addition, fibers such as synthetic fibers like Aramid® fiber and Kevlar® fiber, acrylic fibers, and engineered cellulose fiber may also be utilized.

Useful colorants or tints may include red iron pigment, titanium dioxide, calcium carbonate, and phthalocyanine blue.

Useful fillers that may be used in conjunction with thixotropes may include inorganic fillers such as inorganic clay or silica.

In still another embodiment, if needed, a catalyst may be introduced to the adhesive composition, preferably as a part of the second component, to promote the reaction of the epoxide groups of first component and amine groups of the second component.

Useful catalysts that may be introduced to the adhesive composition include Ancamide® products available from Air Products and products marketed as "Accelerators" available from the Huntsman Corporation. One exemplary catalyst is piperazine-base Accelerator 399 (AHEW: 145) available from the Huntsman Corporation. When utilized, such catalysts comprise between 0 and about 10 percent by weight of the total adhesive composition.

In addition, a catalytic effect may be expected from the reaction product of epichlorohydrin from the first component and the amine compound from the second component in an equivalent ratio of 1:1. An example of such a product is Tetrad® and Tetrad®C available from Mitsubishi Gas Chemical Corporation.

Illustrating the invention are the following examples that are not to be considered as limiting the invention to their details. All parts and percentages in the examples, as well as throughout the specification, are by weight unless otherwise indicated.

### EXAMPLES

### Synthesis of Polyether- Polyester Modified Epoxy Resin

To a four-neck flask fitted with condenser, thermometer, stirrer, and nitrogen inlet, add 304.6 grams of hexahydrophthalic anhydride and 248.1 grams of Terathane® 250. Heat the mixture to 100°C with stirring under nitrogen atmosphere and hold the reaction mixture at 100°C for 155 minutes. Cool the reaction mixture to 60°C and then add 1431.6 grams of EPON 828 and 15.0 grams of triphenyl phosphine. Heat the reaction mixture to 110°C and hold at this temperature for 150 minutes. Then, cool the mixture to room temperature. The resultant compound has 99.89% solids, an acid value of 0.2, and an epoxy equivalent weight of 380.7. The resultant compound is the epoxy adduct of the first component of the 2K adhesive material listed in Part 1 of Table 1 below.

### Evaluation of Adhesives with and without Epoxy-adduct; Evaluation of Adhesive Systems with Varying Amine Hydroxyl Equivalent Weights

The following examples compare 2K adhesive compositions without an epoxy-adduct (Example 1) to those with an epoxy-adduct (Examples 2-4). The formulations for the first component (Part 1) and second component (Part 2) of the 2K adhesive compositions are shown in Table 1. Examples 1 and 3 are not according to the invention.

**Table 1**

| **Formula** | **Ex. 1** | **Ex. 2** | **Ex. 3** | **Ex. 4** |
|---|---|---|---|---|
| **Part 1** | | | | |
| **Epon 828¹** | 46 | 41 | 40.5 | 43 |
| **Epon 828/Terathane 250/HHPA²** | - | 12 | 12 | 6 |
| **Microglass 9132³** | 6 | 2 | - | 4 |
| **Hakuenka CCR-S⁴** | - | - | - | 1.5 |
| **Wacker HDK H17⁵** | 3.5 | 3.25 | 3.5 | 3 |
| **Tint AYD ST 8454⁶** | 0.02 | 0.02 | 0.02 | 0.01 |

| **Part 2** | | | | |
|---|---|---|---|---|
| **Jeffamine D-230⁷** | 11.5 | 12 | 12 | 11.6 |
| **Jeffamine XTJ-616⁸** | 5 | 5 | - | 2.5 |
| **Triethylenetetramine (TETA)⁹** | - | - | 2.3 | - |
| **IPDA¹⁰** | - | - | - | 1.35 |
| **Accelerator 399¹¹** | 2.2 | 2.2 | 2.2 | 0.5 |
| **Microglass 9132³** | 1.5 | 6 | 8 | 4 |
| **Hakuenka CCR-S⁴** | 1 | 1.5 | 6 | 2 |
| **Wacker HDK H17⁵** | 2.75 | 2.5 | 2 | 2.5 |
| **Tint AYD PC 9298¹²** | 0.01 | 0.01 | 0.01 | 0.01 |

| **Results** | | | | |
|---|---|---|---|---|
| **Amine/Epoxy Ratio** | 1.030 | 1.032 | 1.033 | 1.036 |
| **Lap Shear Strength (MPa)** | 24.5 | 26.7 | 25.5 | 31.4 |
| **Elongation (%)** | 3.5 | 3.4 | 3.7 | 3.5 |
| **Tensile Strength (MPa)** | 65 | 61 | 68 | 55 |
| **Modulus (MPa)** | 3185 | 3127 | 3473 | 2931 |
| **(data range)** | (3025-3300) | (2974-3274) | (3233-3671) | (2733-3218) |

| **Fatigue Test (8MPa Stress)** | | | | |
|---|---|---|---|---|
| **cycles to fail** | 173532 | >432000 | 337062 | 329371 |
| **cycles to fail** | 219062 | >432000 | >432000 | >432000 |
| **Average** | **196297** | **>432000** | **337062** | **329371** |

| | | | | |
|---|---|---|---|---|
| 1. BISPHENOL A-EPICHLOROHYDRIN RESIN available from HUNTSMAN ADVANCED MATERIALS 2. Synthesis example 3. Silane treated chopped fiberglass from FIBERTEC 4. PRECIPITATED CALCIUM CARBONATE available from SHIRAISHI KOGYO KAISHA 5. HYDROPHOBIC FUMED SILICA available from WACKER CHEMIE AG 6. ORG YELLOW TINT BASE available from ELEMENTIS SPECIALTIES 7. POLYOXYALKYLENEAMINE available from HUNTSMAN 8. POLYOXYALKYLENEAMINE available from HUNTSMAN 9. TRIETHYLENETETRAMINE available from DOW CHEMICAL CO 10. ISOPHORONE DIAMINE available from EVONIK AG 11. MIX OF ALKANOLAMINE/PIPERAZINE DERVATIVE available from HUNTSMAN 12. PHTHALO BLUE PIGMENT DISPERSION available from ELEMENTIS SPECIALTIES | | | | |

In each of the Examples, the raw materials listed in Table 1 were mixed using a Speedmixer DAC 600 FVZ (commercially available from FlackTek, Inc.). Ingredients 1 and 2 were mixed for 2 minutes at 2350 revolutions per minute ("RPM") in Part 1. Then, items 3 to 6 were added and mixed for one minute at 2350 RPM. Items 7 to 11 were mixed for 1 minute in Part 2 and then the rest of the ingredients were added and mixed for one minute in Part 2. During the mixing process, the mixture was examined with a spatula and given additional mix time, if necessary, to ensure uniformity. The final step of the mixing process involved mixing the mixture with an air motor prop in a vacuum sealed apparatus for 5 minutes at 28 to 30 inches of vacuum pressure. After the final mixing step with the air motor prop, the adhesive compositions were ready for testing.

Part 1 and Part 2 are targeted for 2:1 volume mix ratio. In some instances, appropriate weight ratios were determined to test properties. Amine to epoxy ratio is kept slightly over one for all the examples to insure complete reaction of epoxy as shown in the result section of Table 1. Appropriate weight ratio of Part 1 and Part 2 were weighed and mixed in the DAC mixer for one minute at 2350 RPM and immediately mixed under vacuum as described in previous paragraph. The mixed sample was then subjected to the following tests:

**Lap-Shear Testing:** 25mm X 100mm Coupons were cut from 6-ply unidirectional glass/epoxy laminates supplied by MFG, Inc. with peel ply removed. Coupons were scribed at one end at 12.5mm. Adhesive was applied evenly on one of the coupons within the scribed area for each bond assembly. Uniformity of bond thickness is insured by adding 1.0±0.5 mm glass spacer beads. Spacer beads should be sprinkled evenly over the material, covering no more than 5% of the total bond area. The other test coupon is placed on the bond area and spring loaded clips, such as Binder Clips from Office Max or Mini Spring Clamp from Home Depot, are attached, one to each side of the bond, to hold the assembly together during bake. Care is given to align parallel edges. Excess adhesive that is squeezed out is removed with a spatula before baking. Bond assemblies were given an open time of 15 to 30 minutes and baked at 70 degrees Celsius for six hours, and after cooling, remaining excess was sanded. Bonds were conditioned at room temperature for at least 24 hours. Bonds were inserted in wedge action grips and pulled apart at a rate of 10 mm per minute using an Instron model 5567 in tensile mode. Lap Shear strength was calculated by Instron's Blue Hill software package.

**Free film mechanical properties:** The same adhesive mix was used to prepare void free dog-bone shaped free film by skiving material with care to avoid any air pockets. Figure 1 is an example of a Teflon template to make five dog-bone cavities. The template was glued to a solid Teflon piece with double-side adhesive tape prior to skiving adhesive in the cavity. This assembly was given an open air time of 15 to 30 minutes and then baked at 70°C for 6 hours. It was conditioned at least 24 hours and then the dog-bone shaped free film was popped out of the template. Actual thickness and width were recorded into Instron 5567 software. Then, the dog-bone was inserted into the wedge action grip and pulled at a rate of 50 mm per minute. Percent elongation, tensile strength, and modulus were determined with Instron's Blue Hill software package.

Load controlled lap-shear fatigue test was done using the same laminate and coupon construction as described in the previous paragraph. An automated system utilizing Instron, servo-controlled, hydraulically actuated, closed loop test equipment, and a personal computer with software designed by Westmoreland Mechanical Testing and Research, Inc. provided the means for machine control. Each specimen was inserted in wedge action grips along with frictionally retained shims with thickness equal to that of the fiberglass substrates and bond-line to ensure axial loading. The test was run at room temperature with an R-ratio of 0.1 at 5 Hz sinusoidal waveform and load application of 8 MPa. Testing was continued until 432,000 cycles or failure.

### Evaluation of Pot Life with Adhesives Having Varying Amine Hydroxy Equivalent Weights:

Table 2 shows pot life comparison between propylene oxide-based polyether tetramine, Jeffamine XTJ-616, and ethylene oxide-based triethylenetetramine in similar formulas, wherein the amine/epoxy ratio was maintained between 1.03 and 1.05. The formulations and results are shown in Table 2 (example 6 being not according to the invention):

**Table 2**

| **Pot life Comparison** | | |
|---|---|---|
| **Formula** | **Ex. 5** | **Ex. 6** |
| | **Part 1** | |
| **Epon 828** | 44 | 43.5 |
| **Epon 828/Terathane 250/HHPA** | 6 | 6 |
| **Microglass 9132** | 2 | 1 |
| **Wacker HDK** | 3.5 | 3 |
| **Tint AYD ST 8454** | 0.01 | 0.01 |

| | **Part 2** | |
|---|---|---|
| **Jeffamine D-230** | 12 | 12 |
| **Jeffamine XTJ-616** | 5 | |
| **Triethylenetetramine (TETA)** | - | 2.3 |
| **Accelerator 399** | 0.5 | 0.5 |
| **Microglass 9132** | 5 | 7 |
| **Hakuenka CCR-S** | 3 | 6.64 |
| **Wacker HDK** | 2.25 | 2.36 |
| **Tint AYD PC 9298** | 0.01 | 0.01 |
| **Amine/Epoxy Ratio (2:1 volume mix)** | 1.033 | 1.0464 |
| **Pot Life, minutes** | 174 | 63 |
| **Peak Temperature (°C)** | 73 | 150 |
| **Minutes to reach Peak** | 239 | 83 |

In this experiment, both formulas (Examples 5 and 6) utilized the same amount of Accelerator 399 which also has significant influence on pot-life. If Accelerator 399 was absent, the pot life was found to be significantly higher.

Pot-life is defined as the interval from time when Part 1 (the epoxy component) and Part 2 (the amine component) were mixed and to time when internal temperature of adhesive reaches 50°C in 415 ml. of mass. Part 1 and Part 2 were mixed in a 2 to 1 volume ratio using a static mixer; P C COX pneumatic dual applicator dispensed mixed adhesive into a paper cup marked with 415 ml. level line and initial time was noted. The cup was immediately placed in 25°C water bath with a thermo-couple inserted to the center location of the mixed adhesive mass. PC based data logger was employed to record temperature every minute to determine Pot-life, time taken to reach 50°C, the peak temperature, and the time to reach the peak temperature.

### Evaluation of Adhesives With and Without Reinforcement Filler

In this experiment, the effect of the addition of fiberglass as a reinforcement filler was compared in a sample formulation as described in Table 3:

Examples 7 and 8 in Table 3 are a comparative study without and with microglass 9132 (fiberglass strands with an average of 220 micron length). Results indicate significant increase in modulus when microglass 9132 is present.

**Table 3**

| **Effects** of Fiberglass on Modulus Properties | | |
|---|---|---|
| **Formula** | **Ex. 7** | **Ex. 8** |
| | **Part 1** | |
| **Epon 828¹** | 41 | 41 |
| **Epon 828/Terathane 250/HHPA²** | 12 | 12 |
| **Microglass 9132³** | - | 6 |
| **Wacker HDK H17⁵** | 3.25 | 2 |
| **Tint AYD ST 8454⁶** | 0.02 | 0.02 |

| | **Part 2** | |
|---|---|---|
| **Jeffamine D-230⁷** | 12 | 12 |
| **Jeffamine XTJ-616⁸** | 5 | 5 |
| **Accelerator 399¹¹** | 2.2 | 2.2 |
| **Microglass 9132³** | - | 6 |
| **Hakuenka CCR-S⁴** | 1.5 | 1.5 |
| **Wacker HDK H17⁵** | 2.5 | 2.5 |
| **Tint AYD PC 9298¹²** | 0.01 | 0.01 |
| | | |
| **Amine/Epoxy Ratio** | 1.032 | 1.032 |
| **Lap Shear Strength (MPa)** | 27.7 | 24.4 |
| **Elongation (%)** | 4.8 | 3.5 |
| **Tensile Strength (MPa)** | 66 | 61 |
| **Modulus (MPa)** | 2444 | 3211 |
| **(data range)** | (2246-2673) | (3160-3269) |

Whereas particular embodiments of this invention have been described above for purposes of illustration, it will be evident to those skilled in the art that numerous variations of the details of the present invention may be made without departing from the invention as defined in the appended claims.

## Claims

1. A two-component structural adhesive composition comprising:
(a) a first component comprising:
(1) an epoxy-adduct that is the reaction product of reactants comprising a first epoxy compound, a polyol, and an anhydride and/or a diacid; and
(2) a second epoxy compound; and
(b) a second component that chemically reacts with said first component comprising an amine compound comprising a polypropylene oxide-based polyfunctional polyetheramine, wherein said polypropylene oxide-based polyfunctional polyetheramine comprises a tetrafunctional primary amine having an average molecular weight from 200 to 2000 and an amine hydrogen equivalent weight of greater than 60.

2. The composition of Claim 1, wherein said anhydride comprises at least one of hexahydrophthalic anhydride, phthalic anhydride, methyl hexahydrophthalic anhydride, methyl phthalic anhydride, maleic anhydride, and succinic anhydride; preferably said anhydride comprises hexahydrophthalic anhydride.

3. The composition of Claim 1, wherein said said diacid comprises hexahydrophthalic acid, phthalic acid, methyl hexahydrophthalic acid, methyl phthalic acid, maleic acid, succinic acid, and/or adipic acid.

4. The composition of Claim 2, wherein said amine compound further comprises triethylenetetramine, isophorone diamine, or 1,3-bis(aminomethyl)cyclohexane.

5. The composition of Claim 1, wherein said polypropylene oxide-based polyfunctional polyetheramine comprises:
a) an amine-terminated polypropylene compound according to Formula I: 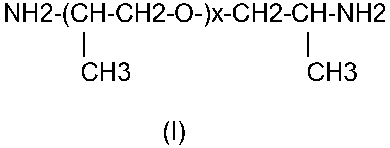 wherein x is between 2 and 70; or
b) a tetrafunctional primary amine having an average molecular weight from 600 to 700 and an amine hydrogen equivalent weight from 70 to 90.

6. The composition of Claim 1, wherein said first component further comprises a reinforcement filler, wherein said reinforcement filler comprises fiberglass, fibrous titanium dioxide, whisker type calcium carbonate, and/or carbon fiber.

7. The composition of Claim 1, wherein said second epoxy compound comprises:
a) a diepoxide having an epoxy equivalent weight from 150 to 1000; or
b) an epoxy-dimer acid adduct; or
c) a carboxyl terminated butadiene-acrylonitrile copolymer modified epoxy compound.

8. The composition of Claim 1, wherein said polyol comprises:
a) a diol having a hydroxyl equivalent weight from 30 to 1000; or
b) a polytetrahydrofuran-based polyol; or
c) a bio-based polyfunctional polyol.

9. The composition of Claim 1, wherein said epoxy-adduct comprises from 3 to 50 weight percent of said first component.

10. The composition of Claim 1, wherein the equivalent ratio of amine to epoxy in the adhesive composition is from 1.0:1 to 1.25:1.

11. A method for forming a wind turbine blade comprising:
(a) applying the composition of Claim 1 to a first portion of a wind turbine blade;
(b) coupling said first portion of the wind turbine blade to a second portion of the wind turbine blade by contacting said second portion to the adhesive composition; and
(c) curing said adhesive composition.

12. A wind turbine blade comprising the cured composition of Claim 1.

## Patentansprüche

1. Zweikomponenten-Strukturkleberzusammensetzung enthaltend:
(a) eine erste Komponente, welche
(1) ein Epoxy-Addukt, welches das Reaktionsprodukt von Reaktanten ist, wobei die Reaktanten eine erste Epoxyverbindung, ein Polyol und ein Anhydrid und/oder eine Disäure umfassen, und
(2) eine zweite Epoxyverbindung, enthält, und
(b) eine zweite Komponente, die chemisch mit der ersten Komponente reagiert, wobei die zweite Komponente eine Aminverbindung enthält, die ein polyfunktionelles Polyetheramin auf Basis von Polypropylenoxid umfasst, wobei das polyfunktionelle Polyetheramin auf Basis von Polypropylenoxid ein tetrafunktionelles primäres Amin mit einem durchschnittlichen Molekulargewicht von 200 bis 2.000 und ein Aminwasserstoff-Äquivalenzgewicht von mehr als 60 aufweist.

2. Zusammensetzung gemäß Anspruch 1, wobei das Anhydrid mindestens eines von Hexahydrophthalsäureanhydrid, Phthalsäureanhydrid, Methylhexahydrophthalsäureanhydrid, Methylphthalsäureanhydrid, Maleinsäureanhydrid und Bernsteinsäureanhydrid umfasst, bevorzugt umfasst das Anhydrid Hexahydrophthalsäureanhydrid.

3. Zusammensetzung gemäß Anspruch 1, wobei die Disäure Hexahydrophthalsäure, Phthalsäure, Methylhexahydrophtalsäure, Methylphthalsäure, Maleinsäure, Bernsteinsäure und/oder Adipinsäure umfasst.

4. Zusammensetzung gemäß Anspruch 2, wobei die Aminverbindung zudem Triethylentetramin, Isophorondiamin oder 1,3-Bis(aminomethyl)cyclohexan umfasst.

5. Zusammensetzung gemäß Anspruch 1, wobei das polyfunktionelle Polyetheramin auf Basis von Polypropylenoxid
a) eine aminterminierte Polypropylenverfbindung gemäß der Formel I 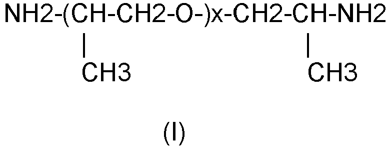 wobei x zwischen 2 und 70 liegt, oder
b) ein tetrafunktionelles primäres Amin, das ein durchschnittliches Molekulargewicht von 600 bis 700 und ein Aminwasserstoff-Äquivalentgewicht von 70 bis 90 aufweist, umfasst.

6. Zusammensetzung gemäß Anspruch 1, wobei die erste Komponente zudem einen Verstärkerfüllstoff enthält, wobei der Verstärkerfüllstoff Fieberglas, faserförmiges Titandioxid, Calciumcarbonat vom Whisker-Typ und/oder Kohlenstofffasern umfasst.

7. Zusammensetzung gemäß Anspruch 1, wobei die zweite Epoxykomponente
a) ein Diepoxid mit einem Epoxyäquivalentgewicht von 150 bis 1.000, oder
b) ein Epoxy-Dimersäure-Addukt, oder
c) eine carboxylterminierte Butadien/Acrylonitril-Copolymer-modifizierte Epoxyverbindung, enthält.

8. Zusammensetzung gemäß Anspruch 1, wobei das Polyol
a) ein Diol mit einem Hydroxyäquivalentgewicht von 30 bis 1.000, oder
b) ein polytetrahydrofuranbasiertes Polyol, oder
c) ein biobasiertes polyfunktionelles Polyol,
enthält.

9. Zusammensetzung gemäß Anspruch 1, wobei das Epoxy-Addukt 3 bis 50 Gew.-% der ersten Komponente enthält.

10. Zusammensetzung gemäß Anspruch 1, wobei das Äquivalenzverhältnis von Amin zu Epoxid in der Klebstoffzusammensetzung 1,0:1 bis 1,25:1 beträgt.

11. Verfahren zum Herstellen eines Windturbinenblatts, umfassend:
(a) Auftragen der Zusammensetzung gemäß Anspruch 1 auf einen ersten Abschnitt eines Windturbinenblatts,
(b) Zusammenfügen des ersten Abschnitts des Windturbinenblatts mit einem zweiten Abschnitt des Windturbinenblatts durch Kontaktieren des zweiten Abschnitts mit der Klebstoffzusammensetzung, und
(c) Härten der Klebstoffzusammensetzung.

12. Windturbinenblatt, das die gehärtete Zusammensetzung gemäß Anspruch 1 enthält.

## Revendications

1. Composition d'adhésif structural à deux composants, comprenant :
(a) un premier composant qui comporte :
(1) un adduit époxydique qui est le produit de réaction entre des partenaires réactionnels constitués par un premier composé époxydique, un polyol, et un anhydride et/ou un diacide,
(2) et un deuxième composé époxydique,
(b) et un deuxième composant qui réagit chimiquement avec ledit premier composant et comporte un composé du type amine comportant une polyéther-amine polyfonctionnelle à base de poly(propylène oxyde), étant entendu que ladite polyéther-amine polyfonctionnelle à base de poly(propylène oxyde) comprend une amine primaire tétrafonctionnelle dont la masse molaire moyenne vaut de 200 à 2000 et le poids équivalent d'hydrogène d'amine est supérieur à 60.

2. Composition selon la revendication 1, dans laquelle ledit anhydride comprend au moins un composé parmi de l'anhydride hexahydrophtalique, de l'anhydride phtalique, de l'anhydride méthyl-hexahydrophtalique, de l'anhydride méthyl-phtalique, de l'anhydride maléique et de l'anhydride succinique, et de préférence ledit anhydride comprend de l'anhydride hexahydrophtalique.

3. Composition selon la revendication 1, dans laquelle ledit diacide comprend de l'acide hexahydrophtalique, de l'acide phtalique, de l'acide méthyl-hexahydrophtalique, de l'acide méthyl-phtalique, de l'acide maléique, de l'acide succinique et/ou de l'acide adipique.

4. Composition selon la revendication 2, dans laquelle ledit composé du type amine comporte par ailleurs de la triéthylène-tétramine, de l'isophorone-diamine ou du 1,3-bis(aminométhyl)-cyclohexane.

5. Composition selon la revendication 1, dans laquelle ladite polyéther-amine polyfonctionnelle à base de poly(propylène oxyde) comprend :
(a) un composé du type polypropylène à terminaisons amine répondant à la formule (I) : 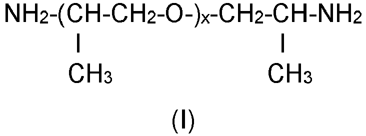 dans laquelle l'indice x est compris dans l'intervalle allant de 2 à 70,
(b) ou une amine primaire tétrafonctionnelle dont la masse molaire moyenne vaut de 600 à 700 et le poids équivalent d'hydrogène d'amine vaut de 70 à 90.

6. Composition selon la revendication 1, dans laquelle ledit premier composant comprend par ailleurs une charge de renforcement, ladite charge de renforcement étant constituée de fibre de verre, de dioxyde de titane fibreux, de carbonate de calcium du type trichite et/ou de fibre de carbone.

7. Composition selon la revendication 1, dans laquelle ledit deuxième composant époxydique comprend :
(a) un diépoxyde dont le poids équivalent d'époxyde vaut de 150 à 1000,
(b) ou un adduit époxyde-acide dimère,
(c) ou un composé époxydique modifié par un copolymère butadiène-acrylonitrile à terminaison(s) carboxyle.

8. Composition selon la revendication 1, dans laquelle ledit polyol comprend :
(a) un diol dont le poids équivalent d'hydroxyle vaut de 30 à 1000,
(b) ou un polyol à base de polytétrahydrofurane,
(c) ou un polyol polyfonctionnel d'origine biologique.

9. Composition selon la revendication 1, dans laquelle ledit adduit époxydique constitue de 3 % à 50 % en poids dudit premier composant.

10. Composition selon la revendication 1, dans laquelle le rapport d'équivalents amine à équivalents époxyde dans la composition adhésive vaut de 1,0/1 à 1,25/1.

11. Procédé en vue de former une pale d'éolienne, qui comprend les opérations suivantes :
(a) appliquer une composition selon la revendication 1 sur une première portion d'une pale d'éolienne,
(b) coupler ladite première portion de la pale d'éolienne à une deuxième portion de la pale d'éolienne en mettant ladite deuxième portion en contact avec la composition adhésive,
(c) et faire durcir ladite composition adhésive.

12. Pale d'éolienne comprenant une composition selon la revendication 1 à l'état durci.
